(19) Europäisches Patentamt
European Patent Office
Office européen des brevets

(11) EP 2 534 206 B1

# (12) EUROPEAN PATENT SPECIFICATION

(45) Date of publication and mention of the grant of the patent:
**02.04.2014 Bulletin 2014/14**

(21) Application number: **11703844.8**

(22) Date of filing: **26.01.2011**

(51) Int Cl.:
*C09B 69/10* (2006.01) *C11D 3/37* (2006.01)
*C11D 3/40* (2006.01) *C11D 11/00* (2006.01)
*D06P 1/38* (2006.01) *D06P 1/384* (2006.01)

(86) International application number:
**PCT/EP2011/051070**

(87) International publication number:
**WO 2011/098355 (18.08.2011 Gazette 2011/33)**

## (54) DYE POLYMERS

FARBSTOFFPOLYMERE

POLYMÈRES COLORANTS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **09.02.2010 PCT/CN2010/000181**

(43) Date of publication of application:
**19.12.2012 Bulletin 2012/51**

(73) Proprietors:
- **Unilever PLC**
  **London, Greater London EC4Y 0DY (GB)**
  Designated Contracting States:
  **CY GB IE MT**
- **Unilever NV**
  **3013 AL Rotterdam (NL)**
  Designated Contracting States:
  **AL AT BE BG CH CZ DE DK EE ES FI FR GR HR HU IS IT LI LT LU LV MC MK NL NO PL PT RO RS SE SI SK SM TR**

(72) Inventors:
- **BATCHELOR, Stephen, Norman**
  **Wirral**
  **Merseyside CH63 3JW (GB)**
- **BIRD, Jayne, Michelle**
  **Wirral**
  **Merseyside CH63 3JW (GB)**
- **CHEN, Wei**
  **Shanghai 200333 (CN)**
- **MENG, Sheng**
  **Shanghai 200335 (CN)**
- **TAO, Qingsheng**
  **Shanghai 200335 (CN)**
- **WANG, Jinfang**
  **Shanghai 200335 (CN)**

(74) Representative: **Avila, David Victor**
**Unilever Patent Group**
**Colworth House**
**Sharnbrook**
**Bedford**
**MK44 1LQ (GB)**

(56) References cited:
**WO-A1-92/17523 US-A- 4 439 206**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).



Printed by Jouve, 75001 PARIS (FR)

## Description

### FIELD OF INVENTION

The present invention concerns the provision and use of laundry shading dye polymers.

### BACKGROUND OF THE INVENTION

WO2006/055787 (Procter & Gamble) discloses Laundry formulations containing a cellulose ether polymer covalently bound to a reactive dye for whitening cellulosic fabric.
WO92/17523 discloses nonionic soil release agents.

### SUMMARY OF THE INVENTION

We have found that reactive dyes bound to water soluble polyester polymers (RDPET) deposit well to cotton fabrics in a first wash, without unacceptably large deposition to polyester, cotton, nylon and elastane after multiple washes.
Anti-soiling benefits are found with the RDPET at surprisingly low levels which are not observed with the PET alone.
In one aspect the present invention provides a method for obtaining a method for obtaining a dye-polymer, the method comprising the step of reacting a polymer with a reactive dye to form the dye-polymer, wherein the polymer is comprised of comonomers of a phenyl dicarboxylate, an oxyalkyleneoxy and a polyoxyalkyleneoxy and the polymer comprises at least one free OH group.
The present invention also extends to the dye-polymers obtainable from the method.
In another aspect the present invention provides a laundry treatment composition comprising:

(i) from 2 to 70 wt% of a surfactant; and,
(ii) from 0.0001 to 20.0 wt% of the dye-polymer, preferably 0.01 to 5wt%.

In a further aspect the present invention provides a method of treating a laundry textile, the method comprising the steps of:

(i) treating a textile with an aqueous solution of the dye-polymer, the aqueous solution comprising from 10 ppb to 500 ppm of the dye-polymer (preferably 0.1 to 50ppm, most preferably 0.5 to 20ppm); and, from 0.0 g/L to 3 g/L, preferably 0.3 to 2 g/L, of a surfactant;
(ii) optionally rinsing; and,
(iii) drying the textile.

Preferably the laundry treatment composition is granular and preferably the granular composition contains sodium carbonate, with predominately anionic surfactants, most preferably LAS.

### DETAILED DESCRIPTION OF THE INVENTION

### POLYMER

Polyesters of terephthalic and other aromatic dicarboxylic acids having soil release properties are widely disclosed in the art, in particular, the so-called PET/POET (polyethylene terephthalate/polyoxyethylene terephthalate) and PET/PEG (polyethylene terephthalate/polyethylene glycol) polyesters which are disclosed, for example, in US 3 557 039 (ICI), GB 1 467 098 and EP 1305A (Procter & Gamble). Other patent publications disclosing soil release polymers which are condensation products of aromatic dicarboxylic acids and dihydric alcohols include EP 185 427A, EP 241 984A, EP 241 985A and EP 272 033A and WO92/17523 (Procter & Gamble) and WO2009/138177 (Clariant).
The polymer must have at least one mole free OH group per mole polymer, to allow covalent binding to the reactive dye(s). Most preferably the polymer comprises at least two free OH groups. Preferably the OH groups are the terminal groups of the polymer.
Preferably, the oxyalkyleneoxy [$-O(CH_2)_tO-$] is selected, from: oxy-1,2-propyleneoxy [$-OCH_2CH(Me)O-$]; oxy-1,3-propyleneoxy [$O-CH_2CH_2CH_2O-$] ; and, oxy-1,2-ethyleneoxy [$-OCH_2CH_2O-$] (t is an interger). As is evident one or more of the $CH_2$ groups of the oxyalkyleneoxy may be substituted by C1 to C4 alkyl group(s).
The polyoxyalkyleneoxy facilitates water solubility of the polymer. Preferably, the polyoxyalkyleneoxy [$-O(CH_2)_w-]_sO-$ is selected from: polyoxy-1,2-propyleneoxy [$-O(CH_2CH(Me)-]_2O-$; polyoxy-1,3-propyleneoxy [O-

$CH_2CH_2CH_2$-]$_s$O-; and, polyoxy-1,2-ethyleneoxy [O-$CH_2CH_2$-]$_s$O-; The polyoxyalkyleneoxy may be a mixture of different oxyalkyleneoxy. Different polyoxyalkyleneoxy types may present in the polymer. (s and w are intergers).

Preferably the phenyl dicarboxylate is a 1,4-phenyl dicarboxylate. Preferably the phenyl dicarboxylate is of the form: -OC(O)$C_6H_4$C(O)O-.

Examples of preferred polymers that are reacted with the reactive dye are a PET/POET (Polyethylene terephthalate/polyoxyethylene terephthalate), PEG/POET (Polyethyleneglycol/ polyoxyethylene terephthalate) or PET/PEG (Polyethylene terephthalate/ Polyethyleneglycol) polymer. Most preferable a PET/POET.

The structure of a preferred polymer is found below.

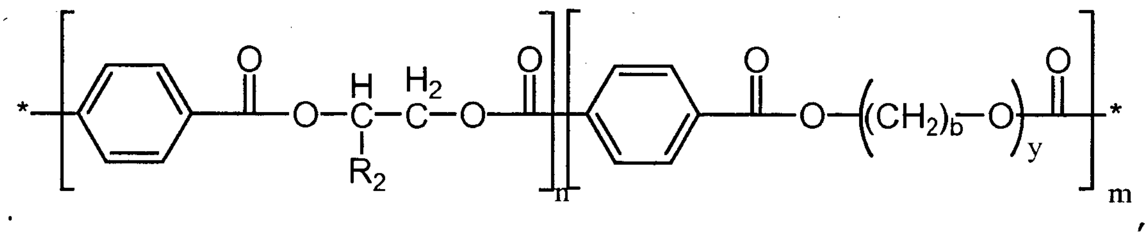

wherein

R$_2$ is selected from H or $CH_3$, preferably H;
b is 2 or 3, preferably 2;
y is 2 to 100, preferably 5 to 50;
n and m are independently 1 to 100, preferably 2 to 30; and, the terminal (end) groups of the polymer are $(CH_2)_bOH$.

The polymers may be synthesised by a variety of routes, for example an esterification reaction of dimethyl terephthalate with ethyleneglycol and polyethyleneglycol, this reaction is discussed in Polymer Bulletin 28, 451-458 (1992). Another example would be the direct esterification of terephthalic acid with ethylene glycol and/or propylene glycol and polypropylene glycol.

A further examples would be a transesterification of a polyethyleneterephthalate with a polyethyleneglycol or polypropylene glycol.

It is preferred that the number average molecular weight of the polymer is in the range from 1000 to 50,000, preferably the average molecular weight of the polymer is in the range of from 1000 to 15000, more preferably from 2000 to 10000.

REACTIVE DYES

A reactive dye may be considered to be made up of a chromophore which is linked to a reactive group. Reactive dyes undergo addition or substitution reactions with -OH, - SH and -$NH_2$ groups to form covalent bonds. The chromophore may be linked directly to the reactive group or via a bridging group. The chromophore serves to provide a colour and the reactive group covalently binds to a substrate.

Reactive dyes are described in Industrial Dyes (K.Hunger ed, Wiley VCH 2003). Many Reactive dyes are listed in the colour index (Society of Dyers and Colourists and American Association of Textile Chemists and Colorists).

Preferred reactive groups of the reactive dyes are dichlorotriazinyl, difluorochloropyrimidine, monofluorotrazinyl, dichloroquinoxaline, vinylsulfone, difluorotriazine, monochlorotriazinyl, bromoacrlyamide and trichloropyrimidine.

Most preferred reactive groups are monochlorotriazinyl; dichlorotriazinyl; and, vinylsulfonyl.

Chromophores are preferably selected from azo, anthraquinone, phthalocyanine, formazan and triphendioxazine. More preferably, azo, anthraquinone, phthalocyanine, and triphendioaxazine. Most preferably, azo and anthraquinone.

Reactive dyes are preferably selected from reactive blue, reactive black, reactive red, reactive violet dyes. Preferably mixtures of reactive dyes are used to provide optimum shading effects. Preferred mixtures are selected from reactive black and reactive red; reactive blue and reactive red; reactive black and reactive violet; reactive blue and reactive violet. Preferably the number of blue or black dye moieties is in excess of the red or violet dye moieties. Most preferably a combination of a reactive blue and a reactive red dyes is used.

Examples of reactive red dyes are reactive red 21, reactive red 23, reactive red 180, reactive red 198, reactive red 239, reactive red 65, reactive red 66, reactive red 84, reactive red 116, reactive red 136, reactive red 218, reactive red 228, reactive red 238. reactive red 245, reactive red 264, reactive red 267, reactive red 268, reactive red 269, reactive red 270, reactive red 271, reactive red 272, reactive red 274, reactive red 275, reactive red 277, reactive red 278, reactive

red 280, reactive red 281, reactive red 282

Examples of reactive black azo dyes are reactive black 5, reactive black 31, reactive black 47, reactive black 49

Examples of reactive blue azo dyes are reactive blue 59, reactive blue 238, reactive blue 260, reactive blue 265, reactive blue 267, reactive blue 270, reactive blue 271, reactive blue 275. Reactive blue azo dyes are preferably bis-azo.

Examples of reactive blue triphenodioxazine dyes are reactive blue 266, reactive blue 268, reactive blue 269

Examples of reactive blue formazan dyes are reactive blue 220 and reactive blue 235.

Examples of preferred reactive blue phthalocyanine dyes are reactive blue 7, reactive blue 11, reactive blue 14, reactive blue 15, reactive blue 17, reactive blue 18, reactive blue 21, reactive blue 23, reactive blue 25, reactive blue 30, reactive blue 35, reactive blue 38, reactive blue 41, reactive blue 71, reactive blue 72

Preferably, the reactive blue anthraquinone dye is of the following form:

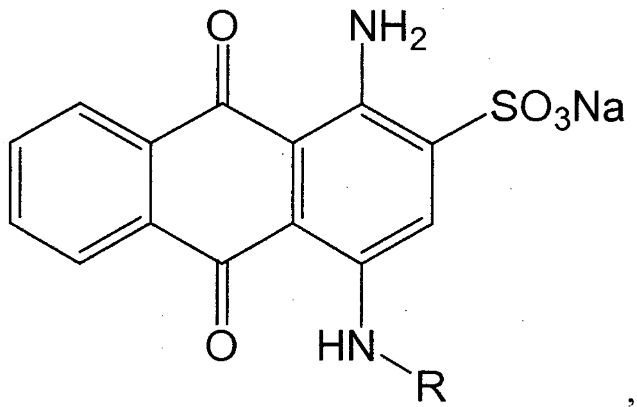

,

wherein R is an organic groups which contains a reactive group. Preferably, R is selected from: monochlorotriazinyl; dichlorotriazinyl; and, vinylsulfonyl.

Preferred reactive blue dyes are selected from: Reactive Blue 2; Reactive Blue 4; Reactive Blue 5; Reactive Blue 19; Reactive Blue 27; Reactive Blue 29; Reactive Blue 36; Reactive Blue 49; Reactive Blue 50; and, Reactive Blue 224.

Preferably, the reactive red azo dye is a reactive red mono-azo dye and preferred reactive red mono-azo dye is of the following form:

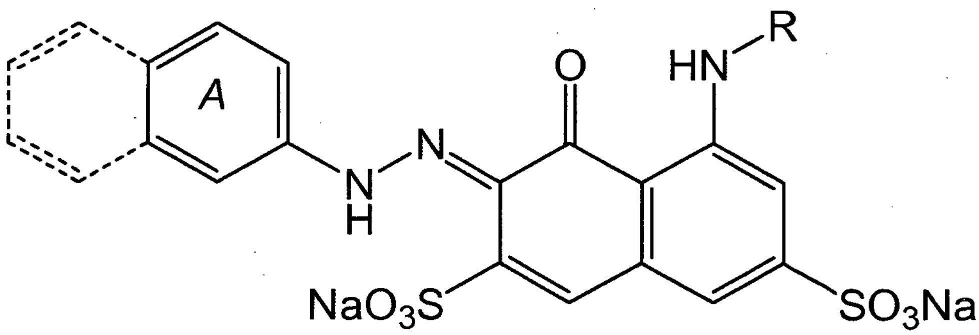

,

wherein the A ring is unsubstituted or substituted by a sulphonate group or a reactive group. Preferably, the A ring is napthyl and is substituted by two sulphonate groups. Preferably, R is an organic groups which contains a reactive group. Preferred reactive groups are monochlorotriazinyl; dichlorotriazinyl; and, vinylsulfonyl.

Preferred reactive red dyes are selected from: Reactive Red 1; Reactive Red 2; Reactive Red 3; Reactive Red 12; Reactive Red 17; Reactive Red 24; Reactive Red 29; Reactive Red 83; Reactive Red 88; Reactive Red 120; Reactive Red 125; Reactive Red 194; Reactive Red 189; Reactive Red 198; Reactive Red 219; Reactive Red 220; Reactive Red 227; Reactive Red 241; Reactive Red 261; and, Reactive Red 253.

The dye polymer has a water solubility at 20°C of at least 0.1 mg/L

<u>OTHER DYES</u>

In a preferred embodiment of the invention, other shading colourants may be present. They are preferably

selected from blue and violet pigment such as pigment violet 23, solvent and disperse dyes such as solvent violet 13, disperse violet 28, bis-azo direct dyes such as direct violet 9, 35, 51 and 99, and triphenodioxazine direct dyes such as direct violet 54.

Even more preferred is the presence of acid azine dyes as described in WO 2008/017570; the level of the acid azine dyes should be in the range from 0.0001 to 0.1 wt%. The acid azine dyes provide benefit predominately to the pure cotton garments and the cationic phenazine dyes to the polycotton garments. Preferred acid azine dyes are acid violet 50, acid blue 59 and acid blue 98. Blue and Violet cationic phenazine dyes may also be present.

Photobleaches such as sulphonated Zn/Al phthalocyanins may be present.

SURFACTANT

The laundry composition comprises between 2 to 70 wt percent of a surfactant, most preferably 10 to 30 wt %. In general, the nonionic and anionic surfactants of the surfactant system may be chosen from the surfactants described "Surface Active Agents" Vol. 1, by Schwartz & Perry, Interscience 1949, Vol. 2 by Schwartz, Perry & Berch, Interscience 1958, in the current edition of "McCutcheon's Emulsifiers and Detergents" published by Manufacturing Confectioners Company or in "Tenside-Taschenbuch", H. Stache, 2nd Edn., Carl Hauser Verlag, 1981. Preferably the surfactants used are saturated.

Suitable nonionic detergent compounds which may be used include, in particular, the reaction products of compounds having a hydrophobic group and a reactive hydrogen atom, for example, aliphatic alcohols, acids, amides or alkyl phenols with alkylene oxides, especially ethylene oxide either alone or with propylene oxide. Specific nonionic detergent compounds are $C_6$ to $C_{22}$ alkyl phenol-ethylene oxide condensates, generally 5 to 25 EO, i.e. 5 to 25 units of ethylene oxide per molecule, and the condensation products of aliphatic $C_6$ to $C_{18}$ primary or secondary linear or branched alcohols with ethylene oxide, generally 5 to 40 EO.

Suitable anionic detergent compounds which may be used are usually water-soluble alkali metal salts of organic sulphates and sulphonates having alkyl radicals containing from about 8 to about 22 carbon atoms, the term alkyl being used to include the alkyl portion of higher acyl radicals. Examples of suitable synthetic anionic detergent compounds are sodium and potassium alkyl sulphates, especially those obtained by sulphating higher $C_8$ to $C_{18}$ alcohols, produced for example from tallow or coconut oil, sodium and potassium alkyl $C_9$ to $C_{20}$ benzene sulphonates, particularly sodium linear secondary alkyl $C_{10}$ to $C_{15}$ benzene sulphonates; and sodium alkyl glyceryl ether sulphates, especially those ethers of the higher alcohols derived from tallow or coconut oil and synthetic alcohols derived from petroleum. The preferred anionic detergent compounds are sodium $C_{11}$ to $C_{15}$ alkyl benzene sulphonates and sodium $C_{12}$ to $C_{18}$ alkyl sulphates. Also applicable are surfactants such as those described in EP-A-328 177 (Unilever), which show resistance to salting-out, the alkyl polyglycoside surfactants described in EP-A-070 074, and alkyl monoglycosides.

Preferred surfactant systems are mixtures of anionic with nonionic detergent active materials, in particular the groups and examples of anionic and nonionic surfactants pointed out in EP-A-346 995 (Unilever). Especially preferred is surfactant system that is a mixture of an alkali metal salt of a $C_{16}$ to $C_{18}$ primary alcohol sulphate together with a $C_{12}$ to $C_{15}$ primary alcohol 3 to 7 EO ethoxylate.

The nonionic detergent is preferably present in amounts less than 50wt%, most preferably less than 20wt% of the surfactant system. Anionic surfactants can be present for example in amounts in the range from about 50% to 100 wt % of the surfactant system.

In another aspect which is also preferred the surfactant may be a cationic such that the formulation is a fabric conditioner.

CATIONIC COMPOUND

When the present invention is used as a fabric conditioner it needs to contain a cationic compound.

Most preferred are quaternary ammonium compounds.

It is advantageous if the quaternary ammonium compound is a quaternary ammonium compound having at least one $C_{12}$ to $C_{22}$ alkyl chain.

It is preferred if the quaternary ammonium compound has the following formula:

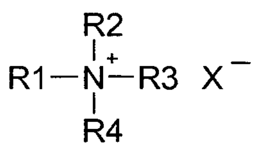

in which $R^1$ is a $C_{12}$ to $C_{22}$ alkyl or alkenyl chain; $R^2$, $R^3$ and $R^4$ are independently selected from $C_1$ to $C_4$ alkyl chains

and $X^-$ is a compatible anion. A preferred compound of this type is the quaternary ammonium compound cetyl trimethyl quaternary ammonium bromide.

A second class of materials for use with the present invention are the quaternary ammonium of the above structure in which $R^1$ and $R^2$ are independently selected from $C_{12}$ to $C_{22}$ alkyl or alkenyl chain; $R^3$ and $R^4$ are independently selected from $C_1$ to $C_4$ alkyl chains and $X^-$ is a compatible anion.

A detergent composition according to claim 1 in which the ratio of (ii) cationic material to (iv) anionic surfactant is at least 2:1.

Other suitable quaternary ammonium compounds are disclosed in EP 0 239 910 (Proctor and Gamble).

It is preferred if the ratio of cationic to nonionic surfactant is from 1:100 to 50:50, more preferably 1:50 to 20:50.

The cationic compound may be present from 1.5 wt % to 50 wt % of the total weight of the composition. Preferably the cationic compound may be present from 2 wt % to 25 wt %, a more preferred composition range is from 5 wt % to 20 wt %.

The softening material is preferably present in an amount of from 2 to 60% by weight of the total composition, more preferably from 2 to 40%, most preferably from 3 to 30% by weight.

The composition optionally comprises a silicone.

BUILDERS OR COMPLEXING AGENTS

Builder materials may be selected from 1) calcium sequestrant materials, 2) precipitating materials, 3) calcium ion-exchange materials and 4) mixtures thereof.

Examples of calcium sequestrant builder materials include alkali metal polyphosphates, such as sodium tripolyphosphate and organic sequestrants, such as ethylene diamine tetraacetic acid.

Examples of precipitating builder materials include sodium orthophosphate and sodium carbonate.

Examples of calcium ion-exchange builder materials include the various types of water-insoluble crystalline or amorphous aluminosilicates, of which zeolites are the best known representatives, e.g. zeolite A, zeolite B (also known as zeolite P), zeolite C, zeolite X, zeolite Y and also the zeolite P-type as described in EP-A-0,384,070.

The composition may also contain 0-65 % of a builder or complexing agent such as ethylenediaminetetraacetic acid, diethylenetriamine-pentaacetic acid, alkyl- or alkenylsuccinic acid, nitrilotriacetic acid or the other builders mentioned below. Many builders are also bleach-stabilising agents by virtue of their ability to complex metal ions.

Zeolite and carbonate (carbonate (including bicarbonate and sesquicarbonate) are preferred builders.

The composition may contain as builder a crystalline aluminosilicate, preferably an alkali metal aluminosilicate, more preferably a sodium aluminosilicate. This is typically present at a level of less than 15%w. Aluminosilicates are materials having the general formula:

$$0.8\text{-}1.5\ M_2O.\ Al_2O_3.\ 0.8\text{-}6\ SiO_2$$

where M is a monovalent cation, preferably sodium. These materials contain some bound water and are required to have a calcium ion exchange capacity of at least 50 mg CaO/g. The preferred sodium aluminosilicates contain 1.5-3.5 $SiO_2$ units in the formula above. They can be prepared readily by reaction between sodium silicate and sodium aluminate, as amply described in the literature. The ratio of surfactants to alumuminosilicate (where present) is preferably greater than 5:2, more preferably greater than 3:1.

Alternatively, or additionally to the aluminosilicate builders, phosphate builders may be used. In this art the term 'phosphate' embraces diphosphate, triphosphate, and phosphonate species. Other forms of builder include silicates, such as soluble silicates, metasilicates, layered silicates (e.g. SKS-6 from Hoechst).

Preferably the laundry detergent formulation is a non-phosphate built laundry detergent formulation, i.e., contains less than 1 wt% of phosphate. Preferably the laundry detergent formulation is carbonate built.

FLUORESCENT AGENT

The composition preferably comprises a fluorescent agent (optical brightener). Fluorescent agents are well known and many such fluorescent agents are available commercially. Usually, these fluorescent agents are supplied and used in the form of their alkali metal salts, for example, the sodium salts. The total amount of the fluorescent agent or agents used in the composition is generally from 0.005 to 2 wt %, more preferably 0.01 to 0.1 wt %. Preferred classes of fluorescer are: Di-styryl biphenyl compounds, e.g. Tinopal (Trade Mark) CBS-X, Di-amine stilbene di-sulphonic acid compounds, e.g. Tinopal DMS pure Xtra and Blankophor (Trade Mark) HRH, and Pyrazoline compounds, e.g. Blankophor SN. Preferred fluorescers are: sodium 2 (4-styryl-3-sulfophenyl)-2H-napthol[1,2-d]triazole, disodium 4,4'-bis{[(4-anilino-6-(N methyl-N-2 hydroxyethyl) amino 1,3,5-triazin-2-yl)]amino}stilbene-2-2' disulfonate, disodium 4,4'-bis{[(4-anilino-6-morpholino-1,3,5-triazin-2-yl)]amino} stilbene-2-2' disulfonate, and disodium 4,4'-bis(2-sulfostyryl)biphenyl.

It is preferred that the aqueous solution used in the method has a fluorescer present. When a fluorescer is present in the aqueous solution used in the method it is preferably in the range from 0.0001 g/l to 0.1 g/l, preferably 0.001 to 0.02 g/l.

PERFUME

Preferably the composition comprises a perfume. The perfume is preferably in the range from 0.001 to 3 wt %, most preferably 0.1 to 1 wt %. Many suitable examples of perfumes are provided in the CTFA (Cosmetic, Toiletry and Fragrance Association) 1992 International Buyers Guide, published by CFTA Publications and OPD 1993 Chemicals Buyers Directory 80th Annual Edition, published by Schnell Publishing Co.

It is commonplace for a plurality of perfume components to be present in a formulation. In the compositions of the present invention it is envisaged that there will be four or more, preferably five or more, more preferably six or more or even seven or more different perfume components.

In perfume mixtures preferably 15 to 25 wt% are top notes. Top notes are defined by Poucher (Journal of the Society of Cosmetic Chemists 6(2):80 [1955]). Preferred top-notes are selected from citrus oils, linalool, linalyl acetate, lavender, dihydromyrcenol, rose oxide and cis-3-hexanol.

Perfume and top note may be used to cue the whiteness benefit of the invention.

It is preferred that the laundry treatment composition does not contain a peroxygen bleach, e.g., sodium percarbonate, sodium perborate, and peracid.

OTHER POLYMERS

The composition may comprise one or more further polymers. Examples are carboxymethylcellulose, poly (ethylene glycol), poly(vinyl alcohol), polycarboxylates such as polyacrylates, maleic/acrylic acid copolymers and lauryl methacrylate/acrylic acid copolymers.

Polymers present to prevent dye deposition, for example poly(vinylpyrrolidone), poly(vinylpyridine-N-oxide), and poly(vinylimidazole), are preferably absent from the formulation.

ENZYMES

One or more enzymes are preferred present in a composition of the invention and when practicing a method of the invention.

Preferably the level of each enzyme is from 0.0001 wt% to 0.1 wt% protein.

Especially contemplated enzymes include proteases, alpha-amylases, cellulases, lipases, peroxidases/oxidases, pectate lyases, and mannanases, or mixtures thereof.

Suitable lipases include those of bacterial or fungal origin. Chemically modified or protein engineered mutants are included. Examples of useful lipases include lipases from *Humicola* (synonym *Thermomyces*), e.g. from *H. lanuginosa* (*T. lanuginosus*) as described in EP 258 068 and EP 305 216 or from *H. insolens* as described in WO 96/13580, a *Pseudomonas* lipase, e.g. from *P. alcaligenes* or *P. pseudoalcaligenes* (EP 218 272), *P. cepacia* (EP 331 376), *P. stutzeri* (GB 1,372,034), *P. fluorescens, Pseudomonas* sp. strain SD 705 (WO 95/06720 and WO 96/27002), *P. wisconsinensis* (WO 96/12012), a *Bacillus* lipase, e.g. from *B. subtilis* (Dartois et al. (1993), Biochemica et Biophysica Acta, 1131, 253-360), *B. stearothermophilus* (JP 64/744992) or *B. pumilus* (WO 91/16422).

Other examples are lipase variants such as those described in WO 92/05249, WO 94/01541, EP 407 225, EP 260 105, WO 95/35381, WO 96/00292, WO 95/30744, WO 94/25578, WO 95/14783, WO 95/22615, WO 97/04079 and WO 97/07202, WO 00/60063.

Preferred commercially available lipase enzymes include Lipolase™ and Lipolase Ultra™, Lipex™ (Novozymes A/S).

The method of the invention may be carried out in the presence of phospholipase classified as EC 3.1.1.4 and/or EC 3.1.1.32. As used herein, the term phospholipase is an enzyme which has activity towards phospholipids. Phospholipids, such as lecithin or phosphatidylcholine, consist of glycerol esterified with two fatty acids in an outer (sn-1) and the middle (sn-2) positions and esterified with phosphoric acid in the third position; the phosphoric acid, in turn, may be esterified to an amino-alcohol. Phospholipases are enzymes which participate in the hydrolysis of phospholipids. Several types of phospholipase activity can be distinguished, including phospholipases $A_1$ and $A_2$ which hydrolyze one fatty acyl group (in the sn-1 and sn-2 position, respectively) to form lysophospholipid; and lysophospholipase (or phospholipase B) which can hydrolyze the remaining fatty acyl group in lysophospholipid. Phospholipase C and phospholipase D (phosphodiesterases) release diacyl glycerol or phosphatidic acid respectively.

The enzyme and the shading dye may show some interaction and should be chosen such that this interaction is not negative. Some negative interactions may be avoided by encapsulation of one or other of enzyme or shading dye

and/or other segregation within the product.

Suitable proteases include those of animal, vegetable or microbial origin. Microbial origin is preferred. Chemically modified or protein engineered mutants are included. The protease may be a serine protease or a metallo protease, preferably an alkaline microbial protease or a trypsin-like protease. Preferred commercially available protease enzymes include Alcalase™, Savinase™, Primase™, Duralase™, Dyrazym™, Esperase™, Everlasern, Polarzyme™, and Kannase™, (Novozymes A/S), Maxatase™, Maxacal™, Maxapem™, Properase™, Purafect™, Purafect OxPT™, FN2™, and FN3™ (Genencor International Inc.).

The method of the invention may be carried out in the presence of cutinase. classified in EC 3.1.1.74. The cutinase used according to the invention may be of any origin. Preferably cutinases are of microbial origin, in particular of bacterial, of fungal or of yeast origin.

Suitable amylases (alpha and/or beta) include those of bacterial or fungal origin. Chemically modified or protein engineered mutants are included. Amylases include, for example, alpha-amylases obtained from *Bacillus,* e.g. a special strain of *B. licheniformis,* described in more detail in GB 1,296,839, or the *Bacillus* sp. strains disclosed in WO 95/026397 or WO 00/060060. Commercially available amylases are Duramyl™, Termamyl™, Termamyl Ultra™, Natalase™, Stainzyme™, Fungamyl™ and BAN™ (Novozymes A/S), Rapidase™ and Purastar™ (from Genencor International Inc.).

Suitable cellulases include those of bacterial or fungal origin. Chemically modified or protein engineered mutants are included. Suitable cellulases include cellulases from the genera *Bacillus, Pseudomonas, Humicola, Fusarium, Thielavia, Acremonium,* e.g. the fungal cellulases produced from *Humicola insolens, Thielavia terrestris, Myceliophthora thermophila*, and *Fusarium oxysporum* disclosed in US 4,435,307, US 5,648,263, US 5,691,178, US 5,776,757, WO 89/09259, WO 96/029397, and WO 98/012307. Commercially available cellulases include Celluzyme™, Carezyme™, Endolase™, Renozyme™ (Novozymes A/S), Clazinase™ and Puradax HA™ (Genencor International Inc.), and KAC-500 (B)™ (Kao Corporation).

Suitable peroxidases/oxidases include those of plant, bacterial or fungal origin. Chemically modified or protein engineered mutants are included. Examples of useful peroxidases include peroxidases from *Coprinus,* e.g. from C. *cinereus,* and variants thereof as those described in WO 93/24618, WO 95/10602, and WO 98/15257. Commercially available peroxidases include Guardzyme™ and Novozym™ 51004 (Novozymes A/S).

## ENZYME STABILIZERS

Any enzyme present in the composition may be stabilized using conventional stabilizing agents, e.g., a polyol such as propylene glycol or glycerol, a sugar or sugar alcohol, lactic acid, boric acid, or a boric acid derivative, e.g., an aromatic borate ester, or a phenyl boronic acid derivative such as 4-formylphenyl boronic acid, and the composition may be formulated as described in e.g. WO 92/19709 and WO 92/19708.

Where alkyl groups are sufficiently long to form branched or cyclic chains, the alkyl groups encompass branched, cyclic and linear alkyl chains. The alkyl groups are preferably linear or branched, most preferably linear. The indefinite article "a" or "an" and its corresponding definite article "the" as used herein means at least one, or one or more, unless specified otherwise.

## Experimental

### Example 1: Dye-polymer Synthesis

A PET/POET polymer was synthesized with a number average molecular weight of 4,900 and a ratio of PET to POET of 1:2.

0.5g of the PET POET polymer, 0.5g $Na_2CO_3$ and 0.1g of reactive dye were mixed together in 35ml of demineralised water and heated at 80°C for 5 hours.

Following the reaction the product was dialyzed against water (COMW=3500) for 72 hours. Water was then removed by rotary evaporation. The resultant polymer was dried in vacuum.

### Example 2: Wash Performance

Woven Cotton, polyester and nylon-elastane fabrics were washed in an aqueous wash solution (demineralised water) containing 1g/L Linear Alkyl benzene sulfonate, 1g/L sodium carbonate and 1g/L sodium chloride at a liquor to cloth ratio of 30:1. To the wash solution shading were added the polymers of example 1 such that the wash solution contained 5ppm of polymer. After 30 minutes of agitation the clothes were removed rinsed and dried. Washes were then repeated until 4 wash cycles had been accomplished. After the 2$^{nd}$ and 4$^{th}$ wash the reflectance spectra of the cloth were measured on a reflectometer and the colour expressed as CIE L* a* b* values.

The increased in whiteness of the cloth was expressed as the change in blue:

$$\Delta b = b_{control} - b_{dye\text{-}polymer}.$$

The results are given in the table below

| Polymer | Δb 4th wash | | |
|---|---|---|---|
| | Polyester | Cotton | Nylon elastane |
| PET POET -RB4 | 0.3 | 0.5 | 0.0 |

The PET POET dye polymer show good deposition to cotton and also polyester.

**Example 3: dye polymer with reactive blue and reactive red dye**

0.07g of reactive blue 4 and 0.03g of reactive red 3 were mixed with 1g of a PET POET polymer, TexCare SRN-300 (ex Clariant) in a manner analogous to example 1, except the reaction was conducted at 65°C for 6 hours.

Washes were conducted with the dye-polymer following the protocol of example 2 and the results are given in the table below:

| Polymer | Δb 2nd wash | | |
|---|---|---|---|
| | Polyester | Cotton | Nylon elastane |
| SRN 300/RB4/RR2 | 0.1 | 0.9 | 0.0 |

The dye polymer shows good deposition to cotton fabrics.

**Example 4: soil anti-redeposition benefits**

4 woven and 4 knitted white cotton fabric squares (15x15cm) were washed at a Liquor:cloth 25:1 in a Tergotometer in 26°FH water with 4g/L of a laundry detergent powder which contained 15% Linear Alkyl benzene sulfonate (LAS) surfactant, 30% $Na_2CO_3$, 40% NaCl, remainder minors included calcite and fluorescer and moisture. To the wash liquor 1ppm of the required polymer was added.

The cloth were dried then the washes repeated four time, with the addition of fresh soil test strips for each wash. The soil strips used were 4 x SBL 2004 Soil Ballast Fabrics (ex wfk Testgewebe GmbH Germany) and 2 x multimix soil ballast fabric (ex CFT Holland). All soil strips were 7.5x15cm pieces on cotton.

After the washes the refelectance at 740nm of the initially white cottons were measured on a reflectometer. The values are shown in the table below:

| | Woven cotton | Knitted cotton |
|---|---|---|
| Control no polymer | 84.5 | 85.9 |
| SRN300 | 84.0 | 85.3 |
| SRN 300/RB4/RR2 | 87.7 | 88.0 |

The white cotton washed in the dye-polymer has significantly higher reflectance than the control or those washed in the polymer without dye. This is because the soil released from the soil strips deposits less to the white cotton due to the dye-polymer.

The dye polymer is effective at preventing soil redeposition at low levels in the wash.

## Claims

1. A method for obtaining a dye-polymer, the method comprising the step of reacting a polymer with a reactive dye to form the dye-polymer, wherein the polymer is comprised of comonomers of a phenyl dicarboxylate, an oxyalkyleneoxy and a polyoxyalkyleneoxy and the polymer comprises at least one free OH group.

**2.** A method for obtaining a dye-polymer wherein the polymer comprises at least two free OH groups.

**3.** A method for obtaining a dye-polymer according to claim 1 or 2, wherein the oxyalkyleneoxy is selected from: oxy-1,2-propyleneoxy; oxy-1,3-propyleneoxy; and, oxy-1,2-ethyleneoxy.

**4.** A method for obtaining a dye-polymer according to any one of claims 1 to 3, wherein the polyoxyalkyleneoxy is selected from: polyoxy-1,2-propyleneoxy; polyoxy-1,3-propyleneoxy; and, polyoxy-1,2-ethyleneoxy.

**5.** A method for obtaining a dye-polymer according to any one of the preceding claims, wherein the phenyl dicarboxylate is a 1,4-phenyl dicarboxylate.

**6.** A method for obtaining a dye-polymer according to claim 5, wherein the polymer is polyethylene terephthalate-polyoxyethylene terephthalate.

**7.** A method for obtaining a dye-polymer according to claim 1, wherein the polymer is selected from:

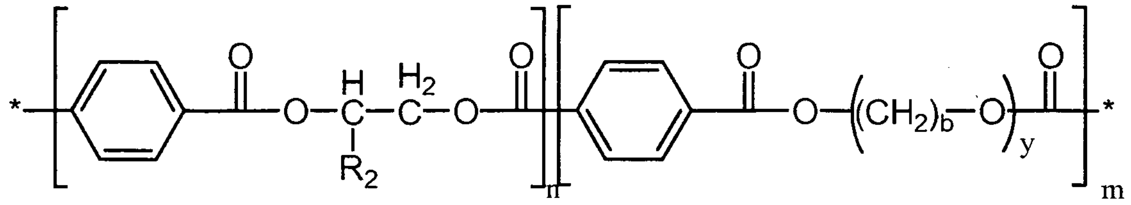

,

wherein $R_2$ is selected from H or $CH_3$;
b is 2 or 3;
y is from 2 to 100;
n and m are independently selected from 1 to 100; and,
terminal groups of the polymer are $(CH_2)_bOH$.

**8.** A method for obtaining a dye-polymer according to claim 1, wherein the reactive group of the reactive dye is selected from: dichlorotriazinyl; difluorochloropyrimidine; monofluorotrazinyl; dichloroquinoxaline; vinylsulfone; difluorotriazine; monochlorotriazinyl; bromoacrlyamide, and trichloropyrimidine.

**9.** A method for obtaining a dye-polymer according to claim 1, wherein the chromophore of the reactive dye is selected from: azo; anthraquinone; phthalocyanine; formazan; and, triphendioaxazine.

**10.** A method for obtaining a dye-polymer according to claim 1, wherein the chromophores of the reactive dye is selected from: azo; and, anthraquinone.

**11.** A method for obtaining a dye-polymer according to any one of claims 2 to 10, wherein the polymer is reacted with reactive red dye and a blue reactive dye, wherein when the weight ratio of the blue dye: the red dye is from 10:1 to 10:4.

**12.** A dye-polymer obtainable from the method as defined in any one of the preceding claim.

**13.** A laundry treatment composition comprising:

(i) from 2 to 70 wt% of a surfactant; and,
(ii) from 0.0001 to 20.0 wt% of the dye-polymer as defined claim 12.

**14.** A laundry treatment composition according to claim 13, wherein the laundry treatment is granular.

**15.** A method of treating a laundry textile, the method comprising the steps of:

(i) treating a textile with an aqueous solution of the dye-polymer as defined in claim 12, the aqueous solution comprising from 10 ppb to 500 ppm of the dye-polymer and, from 0.0 g/L to 3 g/L of a surfactant;

(ii) optionally rinsing; and,
(iii) drying the textile.

## Patentansprüche

1. Verfahren zur Herstellung eines Farbstoffpolymers, wobei das Verfahren den Schritt des Umsetzens eines Polymers mit einem Reaktivfarbstoff unter Bildung des Farbstoffpolymers umfasst, wobei das Polymer Comonomere eines Phenyldicarboxylats, eines Oxyalkylenoxy und eines Polyoxyalkylenoxy enthält und das Polymer wenigstens eine freie OH-Gruppe umfasst.

2. Verfahren zur Herstellung eines Farbstoffpolymers, wobei das Polymer wenigstens zwei freie OH-Gruppen umfasst.

3. Verfahren zur Herstellung eines Farbstoffpolymers gemäß Anspruch 1 oder 2, wobei das Oxyalkylenoxy ausgewählt wird aus: Oxy-1,2-propylenoxy; Oxy-1,3-propylenoxy und Oxy-1,2-ethylenoxy.

4. Verfahren zur Herstellung eines Farbstoffpolymers gemäß einem der Ansprüche 1 bis 3, wobei das Polyoxyalkylenoxy ausgewählt wird aus: Polyoxy-1,2-propylenoxy; Polyoxy-1,3-propylenoxy und Polyoxy-1,2-ethylenoxy.

5. Verfahren zur Herstellung eines Farbstoffpolymers gemäß einem der vorangehenden Ansprüche, wobei das Phenyldicarboxylat ein 1,4-Phenyldicarboxylat ist.

6. Verfahren zur Herstellung eines Farbstoffpolymers gemäß Anspruch 5, wobei das Polymer Polyethylenterephthalat-Polyoxyethylenterephthalat ist.

7. Verfahren zur Herstellung eines Farbstoffpolymers gemäß Anspruch 1, wobei das Polymer ausgewählt wird aus:

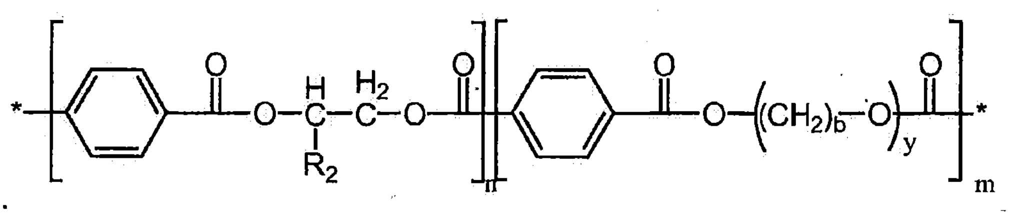

worin $R_2$ aus H oder $CH_3$ ausgewählt ist;
b 2 oder 3 ist;
y von 2 bis 100 ist;
n und m unabhängig ausgewählt sind aus 1 bis 100, und
terminale Gruppen des Polymers $(CH_2)_bOH$ sind.

8. Verfahren zur Herstellung eines Farbstoffpolymers gemäß Anspruch 1, wobei die reaktive Gruppe des Reaktivfarbstoffs ausgewählt wird aus: Dichlortriazinyl; Difluor-chlorpyrimidin; Monofluortriazinyl; Dichlorchinoxalin; Vinylsulfon; Difluortriazin; Monochlortriazinyl; Bromacrylamid und Trichlorpyrimidin.

9. Verfahren zur Herstellung eines Farbstoffpolymers gemäß Anspruch 1, wobei der Chromophor des Reaktivfarbstoffs ausgewählt wird aus: Azo; Anthrachinon; Phthalocyanin; Formazan und Triphendioxazin.

10. Verfahren zur Herstellung eines Farbstoffpolymers gemäß Anspruch 1, wobei die Chromophore des Reaktivfarbstoffs ausgewählt werden aus: Azo und Anthrachinon.

11. Verfahren zur Herstellung eines Farbstoffpolymers gemäß einem der Ansprüche 2 bis 10, wobei das Polymer mit rotem Reaktivfarbstoff und einem blauen Reaktivfarbstoff umgesetzt wird, wobei das Gewichtsverhältnis blauer Farbstoff : roter Farbstoff von 10:1 bis 10:4 ist.

12. Farbstoffpolymer, erhältlich nach dem Verfahren, wie es in einem der vorangehenden Ansprüche definiert ist.

**13.** Wäschebehandlungszusammensetzung, umfassend:

(i) 2 bis 70 Gew.-% eines Tensids und
(ii) 0,0001 bis 20,0 Gew.-% des Farbstoffpolymers, wie es in Anspruch 12 definiert ist.

**14.** Wäschebehandlungszusammensetzung gemäß Anspruch 13, wobei die Wäschebehandlung körnig ist.

**15.** Verfahren zur Behandlung einer Wäschetextilie, wobei das Verfahren die Schritte:

(i) Behandeln einer Textilie mit einer wässrigen Lösung des Farbstoffpolymers, wie in Anspruch 12 definiert, wobei die wässrige Lösung 10 ppb bis 500 ppm des Farbstoffpolymers und 0,0 g/l bis 3 g/l eines Tensids umfasst;
(ii) gegebenenfalls Spülen und
(iii) Trocknen der Textilie

umfasst.

**Revendications**

**1.** Procédé d'obtention d'un colorant-polymère, le procédé comprenant l'étape de réaction d'un polymère avec un colorant réactif pour former le colorant-polymère, où le polymère est composé de comonomères d'un dicarboxylate de phényle, d'un oxyalkylèneoxy et d'un polyoxyalkylèneoxy et le polymère comprend au moins un groupe OH libre.

**2.** Procédé d'obtention d'un colorant-polymère, dans lequel le polymère comprend au moins deux groupes OH libres.

**3.** Procédé d'obtention d'un colorant-polymère selon la revendication 1 ou 2, dans lequel l'oxyalkylèneoxy est choisi parmi : un oxy-1,2-propylèneoxy ; un oxy-1,3-propylèneoxy ; et un oxy-1,2-éthylèneoxy.

**4.** Procédé d'obtention d'un colorant-polymère selon l'une quelconque des revendications 1 à 3, dans lequel le polyoxyalkylèneoxy est choisi parmi : un polyoxy-1,2-propylèneoxy ; un polyoxy-1,3-propylèneoxy ; et un polyoxy-1,2-éthylèneoxy.

**5.** Procédé d'obtention d'un colorant-polymère selon l'une quelconque des revendications précédentes, dans lequel le dicarboxylate de phényle est un dicarboxylate de 1,4-phényle.

**6.** Procédé d'obtention d'un colorant-polymère selon la revendication 5, dans lequel le polymère est un poly(téréphtalate d'éthylène)-poly(téréphtalate d'oxyéthylène).

**7.** Procédé d'obtention d'un colorant-polymère selon la revendication 1, dans lequel le polymère est choisi à partir de :

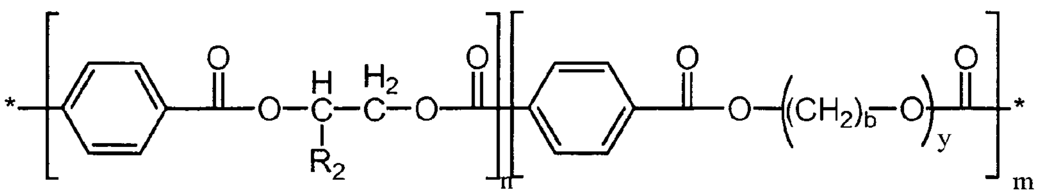

,

où $R_2$ est choisi parmi H ou $CH_3$ ;
b vaut 2 ou 3 ;
y vaut de 2 à 100 ;
n et m sont choisis indépendamment parmi 1 à 100 ; et
les groupes terminaux du polymère sont $(CH_2)_bOH$.

**8.** Procédé d'obtention d'un colorant-polymère selon la revendication 1, dans lequel le groupe réactif du colorant réactif est choisi parmi les groupes : dichlorotriazinyle ; difluorochloropyrimidine ; monofluorotriazinyle ; dichloroquinoxaline ; vinylsulfone ; difluorotriazine ; monochlorotriazinyle ; bromoacrylamide, et trichloropyrimidine.

**9.** Procédé d'obtention d'un colorant-polymère selon la revendication 1, dans lequel le chromophore du colorant réactif est choisi parmi les chromophores : azo ; anthraquinone ; phtalocyanine ; formazan ; et triphendioaxazine.

**10.** Procédé d'obtention d'un colorant-polymère selon la revendication 1, dans lequel le chromophore du colorant réactif est choisi parmi les chromophores : azo ; et anthraquinone.

**11.** Procédé d'obtention d'un colorant-polymère selon l'une quelconque des revendications 2 à 10, dans lequel le polymère est mis à réagir avec un colorant rouge réactif et un colorant bleu réactif, où le rapport pondéral du colorant bleu/le colorant rouge est de 10/1 à 10/4.

**12.** Colorant-polymère pouvant être obtenu à partir du procédé tel que défini dans l'une quelconque des revendications précédentes.

**13.** Composition de traitement de linge comprenant :

(i) de 2 à 70 % en poids d'un surfactant ; et
(ii) de 0,0001 à 20,0 % en poids du colorant-polymère tel que défini dans la revendication 12.

**14.** Composition de traitement de linge selon la revendication 13, où le traitement de linge est granulaire.

**15.** Procédé de traitement d'un textile de linge, le procédé comprenant les étapes suivantes :

(i) le traitement d'un textile avec une solution aqueuse du colorant-polymère tel que défini dans la revendication 12, la solution aqueuse comprenant 10 ppb à 500 ppm du colorant-polymère et, de 0,0 g/l à 3 g/l d'un surfactant ;
(ii) éventuellement un rinçage ; et
(iii) le séchage du textile.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2006055787 A
- WO 9217523 A
- US 3557039 A
- GB 1467098 A
- EP 1305 A
- EP 185427 A
- EP 241984 A
- EP 241985 A
- EP 272033 A
- WO 2009138177 A
- WO 2008017570 A
- EP 328177 A
- EP 070074 A
- EP 346995 A
- EP 0239910 A
- EP 0384070 A
- EP 258068 A
- EP 305216 A
- WO 9613580 A
- EP 218272 A
- EP 331376 A
- GB 1372034 A
- WO 9506720 A
- WO 9627002 A
- WO 9612012 A
- JP 64744992 B
- WO 9116422 A
- WO 9205249 A
- WO 9401541 A
- EP 407225 A
- EP 260105 A
- WO 9535381 A
- WO 9600292 A
- WO 9530744 A
- WO 9425578 A
- WO 9514783 A
- WO 9522615 A
- WO 9704079 A
- WO 9707202 A
- WO 0060063 A
- GB 1296839 A
- WO 95026397 A
- WO 00060060 A
- US 4435307 A
- US 5648263 A
- US 5691178 A
- US 5776757 A
- WO 8909259 A
- WO 96029397 A
- WO 98012307 A
- WO 9324618 A
- WO 9510602 A
- WO 9815257 A
- WO 9219709 A
- WO 9219708 A


### Non-patent literature cited in the description


- *Polymer Bulletin,* 1992, vol. 28, 451-458
- Industrial Dyes. Wiley VCH, 2003
- **SCHWARTZ ; PERRY.** Surface Active Agents. Interscience, 1949, vol. 1
- **SCHWARTZ ; PERRY ; BERCH.** SURFACE ACTIVE AGENTS. Interscience, 1958, vol. 2
- McCutcheon's Emulsifiers and Detergents. Manufacturing Confectioners Company
- **H. STACHE.** Tenside-Taschenbuch. Carl Hauser Verlag, 1981
- CTFA. CFTA Publications, 1992
- OPD 1993 Chemicals Buyers Directory 80th Annual Edition. Schnell Publishing Co, 1993
- **POUCHER.** *Journal of the Society of Cosmetic Chemists,* 1955, vol. 6 (2), 80
- **DARTOIS et al.** *Biochemica et Biophysica Acta,* 1993, vol. 1131, 253-360